# EUROPEAN PATENT APPLICATION

(11) **EP 3 940 880 A1**
(43) Date of publication of application: **19.01.2022**
(21) Application number: 21179766.7
(22) Date of filing: 16.06.2021
(51) Int. Cl.: H01M 50/503, H01M 50/588, H01M 50/59, H01R 11/28

(54) **BATTERY TERMINAL**

(30) Priority: 15.07.2020 JP 2020121522
(71) Applicant: Yazaki Corporation, Minato-ku Tokyo 108-8333 (JP)
(72) Inventor: ITAGAKI, Tatsumasa, Shizuoka, 421-0407 (JP); SAKAGUCHI, Tadahisa, Shizuoka, 421-0407 (JP); KATO, Takayuki, Shizuoka, 421-0407 (JP)
(74) Representative: Grünecker Patent- und Rechtsanwälte PartG mbB

(57) **Abstract**

An objective of the present invention is to provide a battery terminal which enables mounting it to a battery post appropriately. A battery terminal 1 includes a terminal main body 2 and a protector 3 configured to be mounted to the terminal main body, wherein the terminal main body includes a pair of clamping sections 21R, 21L for clamping the battery post 102, a pair of opposed sections 22R, 22L and an operating section 7, each of the pair of opposed sections being continuous with one of both ends of the pair of clamping sections, wherein the operating section is configured to cause the pair of opposed sections to approach each other and tighten the battery post, wherein the protector includes an elastic section 32, wherein the elastic section is provided with a contact section 32C configured to be brought into contact with the upper surface 101a of the battery main body, and a displacement section 32B, wherein the displacement section is provided so as to be freely displaced between an introduction position and a retracted position, wherein when the displacement section is in the introduction position, a tightening operation by the operating section is limited, and wherein the displacement section is configured to be displaced from the introduction position to the retracted position by pressing the contact section against the upper surface of the battery main body so that the tightening operation by the operating section is allowed.

## Description

### BACKGROUND OF THE INVENTION

### Technical Field

The present invention relates to a battery terminal to be connected to a battery post.

### Background Art

Conventionally, power supply may be or is often performed to various circuits from a battery in a vehicle via a battery terminal (see e.g. Patent Document 1).

Patent Document 1 discloses a battery terminal which is configured to be connected electrically and mechanically to battery posts, the battery post protruding from an upper surface of a battery main body. The battery terminal includes a terminal main body with a tightening section for tightening the battery posts, a main body section 5 with a pair of plate-shaped elements 3, 3, post holes 9, 9 each provided in one of the pair of plate-shaped elements 3, 3 for inserting battery posts 7 through the post holes 9, 9, slits 11, 11 each provided in one of the pair of plate-shaped elements 3, 3 and being connected to the post holes 9, 9 from an end of the plate-shaped element 3, 3, plate elements 13 to be arranged between the pair of plate-shaped elements 3, 3 and at both ends of the pair of plate-shaped elements 3, 3 with the slits 11 being interposed between the plate elements 13, a bolt 21 to be arranged at one end side of the plate elements 13 and configured for inserting a fastening section 19, the fastening section 19 being configured so that a nut 17 is fastened in a bolt insertion hole 15 extending through the plate element 13, a bracket 23 arranged between the plate elements 13 and the nut 17 and configured to press the pair of plate-shaped elements 3, 3 from the one end side to the other end side of the plate elements 13 by means of fastening the nut 17, and a holding section 25 provided at the other end side of the plate elements 13, wherein the holding section 25 is configured to be engaged with the pair of plate-shaped elements 3, 3 and to narrow the slits 11 under receiving a pressing force applied on the pair of plate-shaped elements 3, 3 by the bracket 23. The battery terminal further includes a spring element supported by the terminal main body and configured to be positioned between the terminal main body and the upper surface of the battery main body, a clamp section for maintaining a tightened state of the battery posts established by the tightening section, and a fastening element configured to be fastened by being inserted through the terminal main body and the clamp section in the tightened state where the battery posts are tightened by the tightening section. The fastening element includes a bolt and a nut to be screwed into the bolt. The bolt includes a shaft and a head provided at an end of the shaft.

The spring element is supported at its one end by the terminal main body, wherein the head of the bolt is fixed to the other end of the spring element. By pressing the spring element against the upper surface of the battery main body and thus elastically deforming the spring element, the shaft of the bolt is kept in a substantially perpendicular posture with respect to the upper surface of the battery main body.

Such a conventional battery terminal is configured so that the spring element is elastically deformed by bringing it into contact with the upper surface of the battery main body so that the bolt shaft is kept in the substantially perpendicular posture with respect to the upper surface of the battery main body (kept in a correct mounted position). By screwing the nut with the shaft of the bolt being in the correct mounted position, the terminal main body, the spring element and the clamp section to be fixed. In this manner, the battery terminal is connected to the battery posts.

### Citation List

### Patent Literature

Patent Document 1: US 2018/006387 A1

### SUMMARY OF THE INVENTION

However, in the conventional battery terminal, the shaft of the bolt is in a tilted posture with respect to the upper surface of the battery main body (in an incorrect mounted position) in a non-contact state of the spring element with the upper surface of the battery main body, so that this posture may be maintained at the time of tightening the nut. This means that the conventional battery terminal may not be mounted to the battery posts appropriately.

An objective of the present invention is to provide a battery terminal which enables mounting it to a battery post appropriately.

In order to achieve the above-mentioned objective, a battery terminal according to one aspect of the present invention is configured to be connected to a battery post which protrudes from an upper surface of a battery main body, and includes a terminal main body and a protector, the protector being configured to be mounted to the terminal main body and positioned between the terminal main body and the upper surface of the battery main body, wherein the terminal main body includes a pair of clamping sections, a pair of opposed sections and an operating section, the pair of clamping sections being configured to clamp the battery post and each of the pair of opposed sections being continuous with one of both ends of the pair of clamping sections, wherein the operating section is configured to cause the pair of opposed sections to approach each other and tighten the battery post, wherein the protector includes a protector main body supported by the terminal main body, and an elastic section extending from the protector main body, wherein the elastic section is provided with a contact section and a displacement section, the contact section being configured to be brought into contact with the upper surface of the battery main body, and the displacement section being continuous with the contact section, wherein the displacement section is provided so as to be freely displaced between an introduction position and a retracted position, wherein the displacement section is configured to be introduced between the pair of opposed sections in the introduction position, and in the retracted position, to be retracted to an outside of the pair of the opposed sections from the introduction position, wherein when the displacement section is in the introduction position, a tightening operation of the battery post by the operating section is limited, and wherein the displacement section is configured to be displaced from the introduction position to the retracted position by pressing the contact section against the upper surface of the battery main body so that the tightening operation of the battery post by the operating section is allowed.

According to an embodiment of the present invention, when the displacement section is in the introduction position, the protector may be in a natural state, wherein the displacement section may be displaced from the introduction position to the retracted position by pressing the contact section against the upper surface of the battery main body.

According to an embodiment of the present invention, the elastic section may include a protrusion protruding from the displacement section toward the protector main body, wherein the protrusion may have a sliding surface configured to slide to the terminal main body.

According to an embodiment of the present invention, the battery terminal may further include guide sections protruding from the protector main body toward the displacement section, wherein the guide sections are configured to interpose the displacement section therebetween and to guide a displacement of the displacement section between the introduction position and the retracted position.

According to an embodiment of the present invention, the displacement section may include a hooked portion on a tip end side, the tip end side being distal from the contact section, wherein the hooked portion is configured to be hooked to the terminal main body when the displacement section is in the introduction position.

According to an embodiment of the present invention, the battery terminal may include a mounting portion at the pair of clamping sections, the mounting portion protruding toward the upper surface of the battery main body and being configured to mount the protector main body, wherein an exterior tube section and a pressing section may be provided at the protector main body, the exterior tube section being configured to be put on an exterior of the mounting portion, wherein the pressing section protrudes from the exterior tube section toward the mounting portion and is configured to elastically come into contact with the mounting portion.

According to the above-described aspect of the present invention, the elastic section is provided with a contact section and a displacement section, the contact section being configured to be brought into contact with the upper surface of the battery main body, and the displacement section being continuous with the contact section, wherein the displacement section is provided so as to be freely displaced between an introduction position and a retracted position, wherein the displacement section is configured to be introduced between the pair of opposed sections in the introduction position, and in the retracted position, to be retracted to an outside of the pair of the opposed sections from the introduction position, wherein when the displacement section is in the introduction position, the operation by the operating section is limited, and wherein the displacement section is configured to be displaced from the introduction position to the retracted position by pressing the contact section against the upper surface of the battery main body so that the operation by the operating section is allowed. This means that in a state of the protector which is mounted to the terminal main body, and when the displacement section is in the introduction position, the tightening operation by the operating section is limited in case of an incorrect positional relation in which the terminal main body and the upper surface of the battery main body are separated at an inappropriate distance, wherein when the displacement section is in the retracted position, the tightening operation by the operating section is allowed in case of a correct positional relation in which the terminal main body and the upper surface of the battery main body are separated at an appropriate distance. In this manner, in the case of the incorrect positional relation in which the terminal main body and the upper surface of the battery main body are separated at an inappropriate distance, the operating section may not be operated with this incorrect positional position being kept, so that it is possible to mount the battery terminal to the battery post appropriately.

### BRIEF DESCRIPTION OF THE DRAWINGS

Fig.1 is a perspective view of a battery terminal according to an embodiment of the present invention;
Fig.2 is a perspective view of a state in which the battery terminal is connected to a battery post protruding from an upper surface of a battery main body;
Fig.3 is a perspective view of the battery terminal at an angle different from that in Fig.1;
Fig.4 is perspective view of a terminal main body as a part of the battery terminal;
Fig.5 is a perspective view of a protector as a part oof the battery terminal;
Fig.6 is a side view of a state in which a displacement section of the protector is in an introduction position;
Fig.7 is a side view of a state in which the displacement section of the protector is in a retracted position;
Fig.8 shows a procedure of connecting the battery terminal to the battery post in a top view, wherein the displacement section is in the introduction position;
Fig.9 shows a sectional view along the line I-I in Fig.8 in (A), and a sectional view along the line II-II in Fig.8 in (B);
Fig.10 is a sectional view illustrating a post-process after Fig.8, wherein a state of the displacement section in the retracted position is shown from its top;
Fig.11 shows a sectional view along the line III-III in Fig.10 in (A), and a sectional view along the line IV-IV in Fig.10 in (B); and
Fig.12 is a perspective view of an exemplar variation of the battery terminal.

### DETAILED DESCRIPTION OF THE PREFERRED EMBODIMENTS

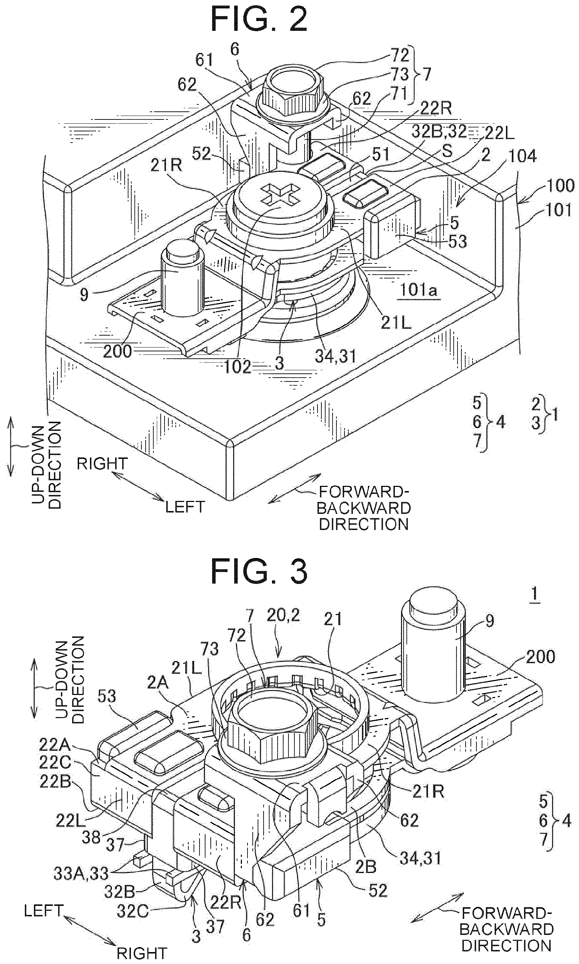

Hereinafter, an embodiment of the present invention will be described with reference to Figs. 1 to 11. Fig.1 shows a perspective view of a battery terminal according to an embodiment of the present invention. Fig.2 is a perspective view of a state in which the battery terminal 1 is connected to a battery post 102 protruding from an upper surface 101a of a battery main body 101. Fig.3 is a perspective view of the battery terminal 1 at an angle different from that in Fig.1.

As shown in Figs.1 to 3, a battery terminal 1 according to the embodiment of the present invention is intended to be electrically and mechanically connected to a battery post 102 and to supply various circuits with power from a battery 100, wherein the battery post 102 protrudes from an upper surface 101a of a battery main body 101. As shown in Fig.2, the battery 100 includes the battery main body 101 and the battery post 102 which protrudes from the upper surface 101a of a recess 104, wherein the recess 104 is positioned at a corner of the battery main body 101.

According to the present embodiment, a direction in which the battery post 102 protrudes from the upper surface 101a of the battery main body 101 may be referred to as an "up-down direction", wherein one direction of extension of the upper surface 101a of the battery main body 101 which is orthogonal to the up-down direction may be referred to as a "right-left direction", wherein in the one direction, a pair of approach/separation elements 22R and 22L as described below are opposed to each other which form part of a terminal main body 2, wherein another direction of extension of the upper surface 101a of the battery main body 101 which is orthogonal to the right-left direction may be referred to as a "forward-backward direction".

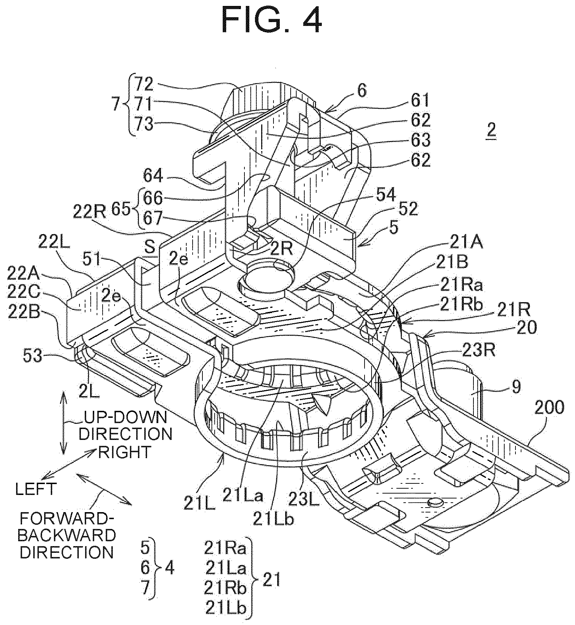

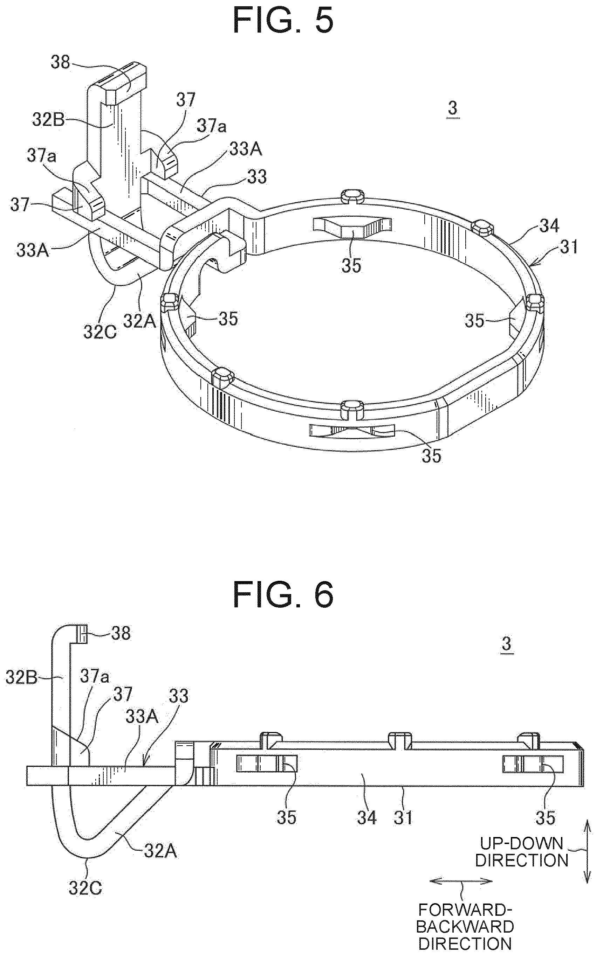

As shown in Figs.3 to 5, the battery terminal 1 includes a terminal main body 2 (shown in Figs.3 and 4) and a protector 3 (shown in Figs.3 and 5), the protector 3 being configured to be mounted to the terminal main body 2 and positioned between the terminal main body 2 and the upper surface 101a of the battery main body 101.

The terminal main body 2 includes a post connecting section 20 and a device connecting section 200 as shown in Figs.3 and 4, wherein the post connecting section 20 is configured to be connected to the battery post 102, and the device connecting section 200 is configured to be connected to various loads (not shown), the various loads being installed in a vehicle (not shown). According to the present embodiment, the device connecting section 200 is continuous with one side of the post connecting section 20 in the forward-backward direction (at upper right in Fig.3). The post connecting section 20 and the device connecting section 200 are formed by applying a press and/or bending process to a single metal sheet made of a conductive material.

As shown in Fig.4, the post connecting section 20 includes a pair of clamping sections 21R, 21L, a pair of approach/separation elements 22R and 22L (a pair of opposed sections) and an operating mechanism 4, wherein the pair of clamping sections 21R, 21L is configured to insert the battery post 102 therein as well as to clamp and tighten the battery post 102, each of the pair of approach/separation elements 22R and 22L is continuous with one of both ends of the pair of clamping sections 21R, 21L, and the operating mechanism 4 is configured to cause the pair of approach/separation elements 22R and 22L to approach each other to tighten the battery post 102.

As shown in Fig.4, each of the pair of clamping sections 21R, 21L includes an upper wall 21A and a lower wall 21B opposed to each other in the up-down direction, wherein the pair of clamping sections 21R, 21L is configured by cutting out C-shaped arc portions 21Ra, 21La, 21Rb, 21Lb (shown in Fig.4; hereinafter, they may be collectively referred to as an "inserting portion 21") in each of the upper wall 21A and the lower wall 21B, the C-shaped arc portions 21Ra, 21La, 21Rb, 21Lb being intended for clamping the battery post 102. Namely, the upper wall 21A is provided with arc portions 21Ra and 21La, while the lower wall 21B is provided with arc portions 21Rb and 21Lb. The upper wall 21A is positioned above the lower wall 21B. Further, C-shaped overhang sections 23R, 23L (mounting portions) are provided at the lower walls 21B, the overhang sections 23R, 23L protruding downward from the arc portions 21Rb, 21Lb (protruding toward the upper surface of the battery main body), wherein the overhang sections 23R, 23L are configured for mounting the protector 3 thereto which will be described below.

As shown in Fig.4, each of the approach/separation elements 22R (22L) includes an upper continuous wall 22A, a lower continuous wall 22B and a coupling wall 22C, wherein the upper continuous wall 22A is continuous with the upper wall 21A of a corresponding clamping section 21R (21L), the lower continuous wall 22B is continuous with the lower wall 21B, and wherein the coupling wall 22C couples the upper continuous wall 22A to the lower continuous wall 22B, wherein each of the approach/separation elements 22R (22L) is formed in a C-shape. The pair of approach/separation elements 22R and 22L as described above is configured to be caused to approach and separated from each other in the right-left direction. By causing the approach/separation elements 22R and 22L to approach each other, they clamp the battery post 102 via the clamping sections 21R, 21L which each are continuous with the respective approach/separation elements 22R and 22L. By separating the approach/separation elements 22R and 22L from each other, the tightened battery post 102 is loosened via the clamping sections 21R, 21L which each are continuous with the respective approach/separation elements 22R and 22L.

As shown in Fig.4, the operating mechanism 4 includes a nut element 5, a bracket 6 and a bolt 7 (operating section), wherein the nut element 5 is configured to cause the pair of approach/separation elements 22R and 22L to approach each other and separate them from each other.

The nut element 5 is formed from a metal sheet made of a conductive material. As shown in Fig.4, the nut element 5 includes a plate nut main body 51 having a rectangular parallelepiped shape, a first contact section 52 and a second contact section 53, wherein the first contact section 52 is formed at one end of the plate nut main body 51 in a longitudinal direction (right-left direction) and configured to clamp the bracket 6 between the first contact section 52 and an end edge 2R of the approach/separation element 22R (shown in Fig.4) and to come into contact with it, and wherein the second contact section 53 is formed at the other end of the plate nut main body 51 and configured to come into contact with an end edge 2L of the approach/separation element 22R. The bracket 6 will be described later. In the plate nut main body 51, a bolt hole 54 is provided in a position adjacent to the first contact section 52, the bolt hole 54 being configured to be screwed to a shaft 71 of the bolt 7 as described below. The plate nut main body 51 has a length which allows one of the pair of approach/separation elements 22R and 22L to be bridged to the other of the approach/separation elements 22R and 22L, while the plate nut main body 51 has a thickness which allows it to be inserted between the upper continuous wall 22A and the lower continuous wall 22B.

As shown in Figs.4, the bracket 6 includes a plate-shaped opposed plate section 61 and a pair of standing plates 62, 62, the opposed plate section 61 being configured to be arranged above and opposed to the post connecting section 20, wherein each of the pair of standing plates 62, 62 is continuous with one of both end edges of the opposed plate section 61 in its width direction (forward-backward direction) and angled at the corresponding end edge of the opposed plate section 61 to extend into a space between the approach/separation element 22R and the first contact section 52 of the nut element 5. The opposed plate section 61 has a bolt insertion hole 63 for inserting the shaft 71 of the bolt 7 as described below.

Each of the standing plates 62 is formed so as to have a substantially trapezoidal shape in a plan view. Each of the standing plates 62 includes a first rectilinear section 64 on one side in the right-left direction, and a second opposed section 65, wherein the second opposed section 65 is facing the other side of the standing plate 62 opposite to the first rectilinear section 64. The second opposed section 65 includes an oblique side portion 66 on an upper side and a rectilinear portion 67, the rectilinear portion 67 being located below and continuous with the oblique side portion 66. The oblique side portion 66 is formed by an oblique side so that a distance between the oblique side and the first rectilinear section 64 in the forward-backward direction is increased upwards.

The bolt 7 includes the shaft 71, a head 72 at a tip end of the shaft 71, and a washer 73.
The shaft 71 has threads on its outer circumferential surface to screw it into the bolt hole 54 of the nut element 5. It is to be noted that the washer 73 may be omitted for the bolt 7.

For tightening the battery post 102 via the pair of clamping sections 21R, 21L by operating such an operating mechanism 4, the bolt 7 is brought close to the bolt hole 54 while clamping each of the standing plates 62 of the bracket 6 between the end edge 2R of the approach/separation element 22R and the first contact section 52 of the nut element 5, wherein the bolt 7 is then rotated in a tightening direction (e.g. clockwise). By further rotating the bolt 7, the opposed plate section 61 and the pair of standing plates 62, 62 are pressed by the head 72 of the bolt 7 to be moved downward. Since each of the standing plates 62 is formed with the oblique side portion 66 so that its width is increased upward, one (right) approach/separation element 22R is brought close to the other (left) approach/separation element 22L by the standing plates 62 and the first contact section 52, wherein these contact elements 22R, 22L which approach each other cause the clamping sections 21R, 21L to clamp and tighten the battery post 102, the clamping sections 21R, 21L being continuous with the respective contact elements 22R, 22L. On the other hand, when rotating the bolt 7 in a direction opposite to the tightening direction (e.g. counterclockwise), the one (right) approach/separation element 22R is separated from the other (left) approach/separation element 22L so that the tightened battery post 102 is loosened by the clamping sections 21R, 21L which are continuous with the respective contact elements 22R, 22L.

For the device connecting section 200, the upper wall 21A is partially bent toward the lower wall 21B to clamp a stud bolt 9 between the upper wall 21A and the lower wall 21B and thus hold the stud bolt 9 therebetween, whereby the device connecting section 200 is thus configured. This stud bolt 9 is configured to be connected to various loads e.g. via fuse unit in order to supply the various loads with power of the battery 100 via the device connecting section 200 (battery terminal 1).

As shown in Figs.5 to 7, the protector 3 includes a ring section 31 (protector main body), an elastic element 32 (elastic section) and guide sections 33, the ring section 31 being configured to be mounted to the overhang sections 23R and 23L of the terminal main body 2, wherein the elastic element 32 is continuous with the ring section 31 and configured to be displaced between a first position (introduction position) and a second position (retracted position), wherein the guide section 33 is configured to guide displacement of the elastic element 32 so that the elastic element 32 performs a predetermined displacement. The protector 3 according to the present embodiment is formed from a resin moulded component. Although the protector 3 according to the present embodiment is formed from a resin moulded component, the present invention is not limited thereto. The protector may be formed by applying a press and/or bending process to a metal sheet.

The ring section 31 includes a ring main body 34 (exterior tube section) and pressing sections 35 protruding from the ring main body 34 toward the overhang sections 23R, 23L, the ring main body 34 being configured to be put on the exterior of the overhang sections 23R and 23L of the terminal main body 2, wherein the pressing sections 35 are configured to elastically come into contact with the overhang sections 23R, 23L. The pressing sections 35 are provided in multiple positions at an appropriate interval on an inner surface of the ring main body 34. Due to the pressing sections 35 which are configured to elastically come into contact with the overhang sections 23R, 23L in the above-described manner, it is possible to suppress generation of abnormal noises in the case of a vehicle vibration before and after tightening the battery post 102 by the clamping sections 21R, 21L.

The elastic element 32 includes a first elastic section 32A with a rectangular plate shape and a second elastic section 32B (displacement section), the first elastic section 32A extending from a circumference of the ring main body 34, wherein the second elastic section 32B is continuous with the first elastic section 32A. In a mounted state of the ring section 31 to the terminal main body 2, the first elastic section 32A extends toward the upper surface of the battery 100, wherein the first elastic section 32A is bent at a boundary portion 32C between the first elastic section 32A and the second elastic section 32B (hereinafter referred to as a "contact section 32C") so that the second elastic section 32B extends away from the upper surface of the battery 100.

The second elastic section 32B includes an elastic section main body 36, protrusions 37, and a hooked portion 38, the elastic section main body 36 being continuous with the first elastic section 32A, wherein the protrusions 37 protrude from the elastic section main body 36 toward the ring section 31, wherein the hooked portion 38 is formed by bending a tip end portion of the elastic section main body 36 and configured to be hooked in a gap S in the terminal main body 2 (shown in Fig.4; the hooked portion 38 is specifically hooked to the plate nut main body 51 which is exposed in the gap S). The protrusions 37 are provided at a middle portion of the elastic section main body 36 in its extending direction. The protrusions 37 are continuous with both end edges of the elastic section main body 36 in its width direction (forward-backward direction), and bent at the respective end edges of the elastic section main body 36 to protrude toward the ring section 31. The protrusions 37 have sliding surfaces 37a which are slid to lower end edges 2e (shown in Figs.4, 9(B) and 11(B)), the lower end edges 2e being arranged at boundaries between the lower continuous walls 22B of the terminal main body 2 and the coupling walls 22C. The sliding surfaces 37a are formed from oblique surfaces which are tilted downward in a protruding direction (toward the ring section 31) when the second elastic section 32B is in a first position.

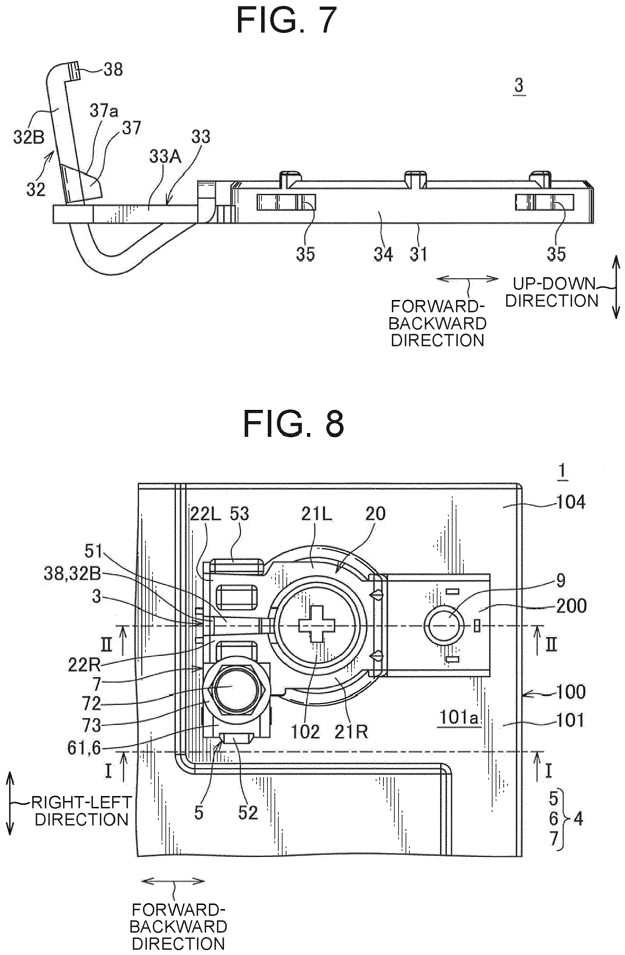

As shown in Figs.6 and 7, such an elastic element 32 is in the first position in a natural state (shown in Fig.6), wherein the elastic element 32 is configured so that the second elastic section 32B is elastically deformed and displaced to a second position (shown in Fig.7) by pressing the contact section 32C against the upper surface 101a of the battery main body 101 while the contact section 32C is in contact with the upper surface 101a.

The guide sections 33 are formed from a pair of guide rails 33A, 33A. The pair of guide rails 33A, 33A protrude toward the elastic element 32 and interpose the elastic element 32 therebetween.

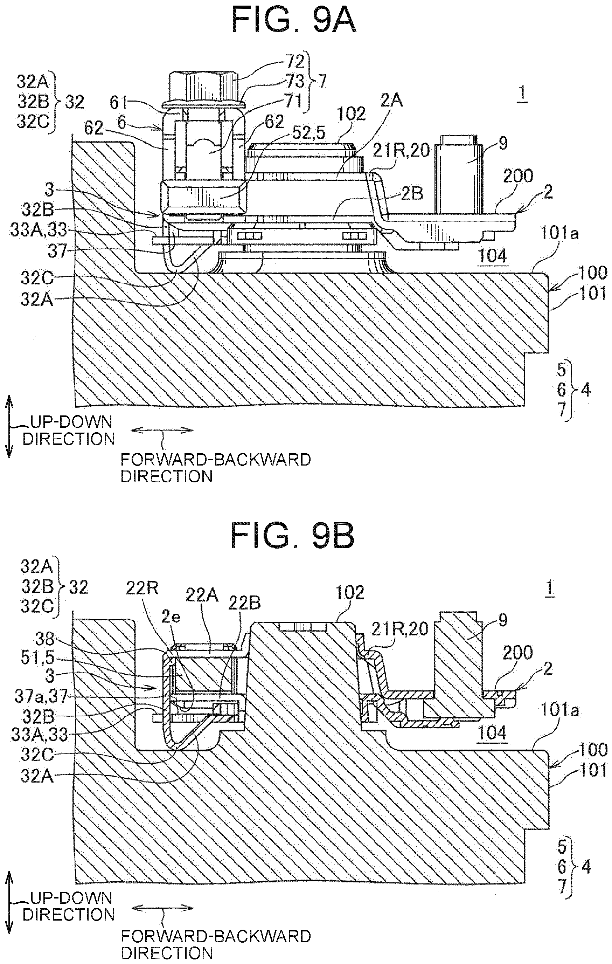

When such a protector 3 is in the first position, the second elastic section 32B of the elastic element 32 is positioned in the gap S between the pair of approach/separation elements 22R and 22L, as shown in Figs.6, 9(A) and (B), wherein the hooked portion 38 is hooked to the plate nut main body 51 which is exposed through the gap S, and the protrusions 37 are arranged in such a position that it can come into contact with the lower end edges 2e of the terminal main body 2 (or may be in contact with the lower end edges 2e at this time).

Further, when the protector 3 is displaced from the first position to the second position, the protector 3 is brought close to the battery main body 101 while being mounted to the terminal main body 2, and the contact section 32C is brought close (moved) to the upper surface 101a of the battery main body 101 to come into contact with the upper surface 101a. The contact section 32C is further moved while being still in contact, and the sliding surfaces 37a of the protrusions 37 come into contact with the lower end edges 2e of the terminal main body 2. Then, the contact section 32C is further moved and slid on the sliding surfaces 37a of the protrusions 37, the protrusions 37 are pressed by the lower end edges 2e of the terminal main body 2, wherein the second elastic section 32B of the elastic element 32 is retracted out of the gap S between the pair of approach/separation elements 22R and 22L to release the hooked portion 38 which has been hooked to the plate nut main body 51. At this time, the elastic element 32 is positioned between the pair of guide rails 33A, and guided by the pair of guide rails 33A to smoothly displace the second elastic section 32B between the introduction position and the retracted position. In this manner, the protector 3 is displaced from the first position to the second position.

In the following description, a procedure of connecting the battery terminal 1 to the battery post 102 will be described with reference to Figs.8 to 11.

First, while the protector 3 is mounted to the terminal main body 2, and the elastic element 32 is in the first position, the inserting portion 21 between the pair of clamping sections 21L and 21R is brought close to the battery post 102 in order to insert the battery post 102 therebetween.

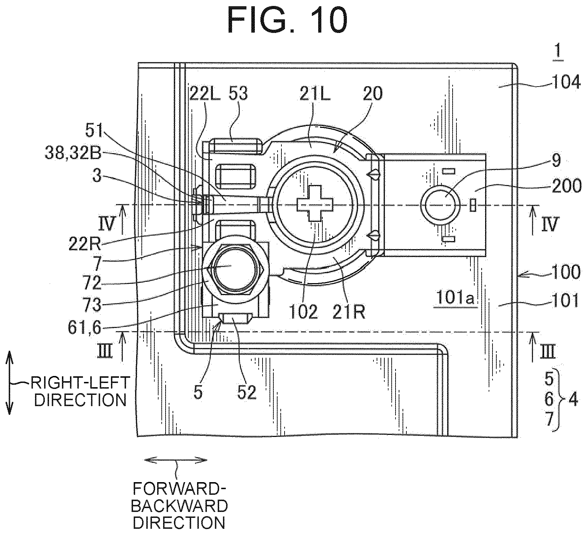

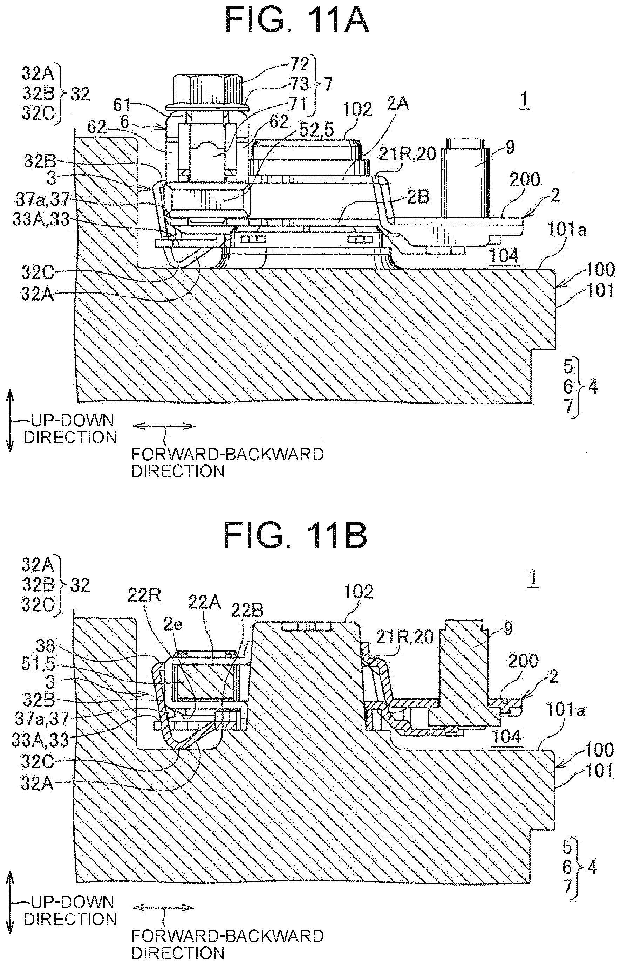

In a state of the protector 3 which is in the first position, the second elastic section 32B of the elastic element 32 is positioned in the gap S between the pair of approach/separation elements 22R and 22L, whereby the tightening operation (operation) by the bolt 7 is limited. By further inserting the battery post 102, the contact section 32C of the protector 3 comes into contact with the upper surface 101a of the battery main body 101, as shown in Figs.8, 9(A) and (B). The battery post 102 is further inserted, and the sliding surface 37a of the protrusions 37 come into contact with the lower end edges 2e of the terminal main body 2 (shown in Fig.2). When the battery post 102 is further inserted and the terminal main body 2 and the upper surface 101a of the battery main body 101 are brought close to each other until they reach a correct positional relation in which they are separated at an appropriate distance, the sliding surfaces 37a of the protrusions 37 are slid to the lower end edges 2e of the terminal main body 2, the protrusions 37 are pressed by the lower end edges 2e of the terminal main body 2, so that the second elastic section 32B of the elastic element 32 is retracted out of the gap S between the pair of approach/separation elements 22R and 22L, whereby the hooked portion 38 which has been hooked to the plate nut main body 51 is released. In this manner, the protector 3 is displaced from the first position to the second position, as shown in Figs. 10, 11(A) and (B).

In a state of the protector 3 which is in the second position, the terminal main body 2 and the upper surface 101a of the battery main body 101 should be in the correct positional relation in which they are separated at the appropriate distance, whereby the limited tightening operation by the bolt 7 is released, as shown in Figs. 10 and 11(A) and (B). This means that the tightening operation by the bolt 7 is allowed. In the second position of the protector 3, the bolt 7 is rotated in the tightening direction. By further rotating the bolt 7 and thus causing the one (right) approach/separation element 22R to approach the other (left) approach/separation element 22L, the clamping sections 21R, 21L which are continuous with the respective contact elements 22R, 22L clamp and tighten the battery post 102. The bolt 7 is further rotated, and the battery post 102 is completely tightened by the pair of clamping sections 21R and 21L. In this manner, the battery terminal 1 is electrically and mechanically connected to the battery post 102.

For disconnecting the battery terminal 1 from the battery post 102, the bolt 7 is rotated in the direction opposite to the tightening direction. By further rotating the bolt 7 and thus separating the one (right) approach/separation element 22R away from the other (left) approach/separation element 22L, the battery post 102 which has been tightened by the clamping sections 21R and 21L is loosened, the clamping sections 21R and 21L being continuous with the respective contact elements 22R and 22L. This is accompanied by separation of the terminal main body 2 away from the upper surface 101a of the battery main body 101 to remove the contact state of the contact section 32C of the protector 3 with the upper surface 101a of the battery main body 101. The clamping sections 21R and 21L are further separated to elastically restore the natural state of the elastic element 32, wherein the protector 3 is displaced to the first position from the second position.

According to the above-described embodiment, the elastic element 32 (elastic section) is provided with the contact section 32C and the second elastic section 32B (displacement section), the contact section 32C being configured to be brought into contact with the upper surface 101a of the battery main body 101, and the second elastic section 32B being continuous with the contact section 32C, wherein the second elastic section 32B is provided so as to be freely displaced between the first position (introduction position) and the second position (retracted position), wherein the second elastic section 32B is configured to be introduced into the gap S between the pair of approach/separation elements 22R and 22L (pair of opposed sections) in the first position, and in the second position, to be retracted to the outside of the pair of the approach/separation elements 22R and 22L from the first position, wherein when the second elastic section 32B is in the introduction position, the operation by the bolt 7 (operating section) is limited, and wherein the second elastic section 32B is configured to be displaced from the first position to the second position by pressing the contact section 32C against the upper surface 101a of the battery main body 101 so that the limited operation by the bolt 7 is released and allowed. This means that in a state of the protector 3 which is mounted to the terminal main body 2, and when the second elastic section 32B is in the first position, the terminal main body 2 and the upper surface 101a of the battery main body 101 should be in an incorrect positional relation in which they are separated at an inappropriate distance, so that the tightening operation by the bolt 7 is limited, while when the second elastic section 32B is in the second position, the terminal main body 2 and the upper surface 101a of the battery main body 101 should be in a correct positional relation in which they are separated at an appropriate distance, so that the tightening operation by the bolt 7 is allowed. In this manner, in the case of the incorrect positional relation in which the terminal main body 2 and the upper surface 101a of the battery main body 101 are separated at an inappropriate distance, the bolt 7 may not be operated with this positioning being kept, so that it is possible to mount the battery terminal to the battery post 102 appropriately.

Further, when the second elastic section 32B (displacement section) is in the first position (introduction position), the second elastic section 32B is in the natural state, wherein the second elastic section 32B is displaced from the first position (introduction position) to the second position (retracted position) by pressing the contact section 32C against the upper surface 101a of the battery main body 101. This enables the battery terminal to be mounted to the battery post 102 appropriately without reduction in the operability.

Further, the elastic element 32 (elastic section) includes protrusions 37 protruding from the second elastic section 32B (displacement section) toward the ring section 31 (protector main body), wherein the protrusions 37 have sliding surfaces 37a configured to slide to the lower end edges 2e of the terminal main body 2. This causes the sliding surfaces 37a of the protrusions 37 to slide to the lower end edges 2e of the terminal main body 2 when the contact section 32C is pressed against the upper surface 101a of the battery body 101, which enables the displacement of the second elastic section 32B from the first position (introduction position) to the second position (retracted position) with a small force.

Furthermore, the battery terminal 1 includes the guide sections 33 protruding from the ring section 31 (protector main body) toward the second elastic section 32B (displacement section), wherein the guide sections 33 are configured to interpose the second elastic section 32B therebetween and to guide a displacement of the second elastic section 32B between the first position (introduction position) and the second position (retracted position). In this manner, the second elastic section 32B is guided by the guide sections 33 so that the second elastic section 32B is displaced smoothly between the first position and the second position.

Moreover, the second elastic section 32B (displacement section) includes the hooked portion 38 on a tip end side, the tip end side being distal from the contact section 32C, wherein the hooked portion 38 is configured to be hooked to the terminal main body 2 when the second elastic section 32B is in the introduction position. This may enable a fallout of the protector 3 from the terminal main body 2 to be suppressed when the second elastic section 32B is in the first position (introduction position).

Furthermore, the battery terminal 1 includes the C-shaped overhang sections 23R and 23L at the pair of clamping sections 21R and 21L, the overhang sections 23R and 23L protruding toward the upper surface 101a of the battery main body 101 and being configured to mount the ring main body 31, wherein the ring main body 34 and the pressing sections 35 are provided at the ring section 31 (protector main body), the ring main body 34 being configured to be put on the exterior of the overhang sections 23R, 23L of the terminal main body 2, wherein the pressing sections 35 protrude from the ring main body 34 toward the overhang sections 23R, 23L and are configured to elastically come into contact with the overhang sections 23R and 23L. Here, if the pressing sections 35 are configured to be in contact with the overhang sections 23R, 23L before tightening as well as after tightening the battery post 102, it is possible to suppress generation of abnormal noises in the case of a vehicle vibration.

It is to be noted that the present invention is not limited to the above-described embodiment, but includes further embodiments etc. which can achieve the objective of the present invention, wherein the present invention also includes the following variation etc.

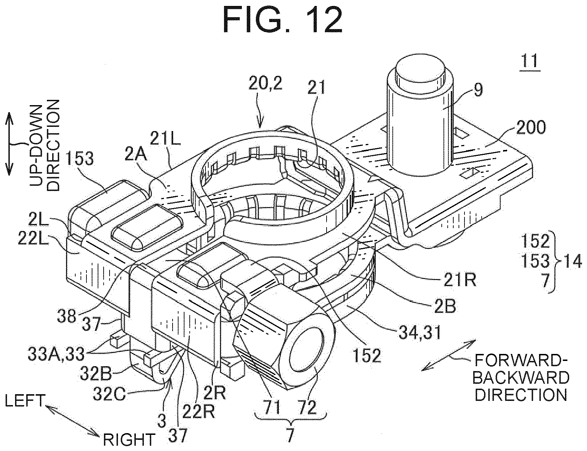

According to the above-described embodiment, the operating mechanism 4 includes the nut element 5, bracket 6 and the bolt 7 (operating section), wherein the nut element 5 is configured to cause the pair of approach/separation elements 22R and 22L to approach each other and separate them from each other. However, the present invention is not limited thereto. The operating mechanism 14 may be configured with a washer element 152 and a plate nut 153 for causing the pair of approach/separation elements 22R and 22L to approach each other and to be separated from each other, and the bolt 7, as shown in Fig.12. This means that the bracket 6 may be omitted. Fig.12 shows a perspective view of an exemplar variation of the battery terminal 1. It is to be noted that elements in Fig.12 which have the same structure and/or the same function as those in the above-described embodiment are indicated by the same reference signs, and the corresponding description will be omitted.

The washer element 152 and the plate nut 153 each consist of a conductive material. As shown in Fig.12, the washer element 152 is configured to come into contact with the end edge 2R of the approach/separation element 22R, while the plate nut 153 is configured to come into contact with the end edge 2L of the approach/separation element 22L. The washer element 152 has a bolt insertion hole which is not shown, the bolt insertion hole being configured for insert the shaft 71 of the bolt 7 therethrough. The plate nut 153 has a bolt hole which is not shown, the bolt hole being configured to be screwed to the shaft 71 of the bolt 7.

In such an operating mechanism 14, while the washer element 152 is in contact with the end edge 2R of the approach/separation element 22R and the plate nut 153 is in contact with the end edge 2L of the approach/separation element 22L, the shaft 71 of the bolt 7 is inserted through the bolt insertion hole in the washer element 152 and brought close to the bolt hole in the plate nut 153 wherein the bolt 7 is rotated in a tightening direction (e.g. clockwise). This means that the bolt 7 is inserted through the washer element 152 so that the shaft 71 extends in the right-left direction, wherein the bolt 7 is then screwed into the plate nut 153. By further rotating the bolt 7 and thus pushing the one (right) approach/separation element 22R by the head 72 of the bolt 7 to bring it to the other (left) approach/separation element 22L, the clamping sections 21R, 21L which are continuous with the respective contact elements 22R, 22L clamp and tighten the battery post 102. On the other hand, when the bolt 7 is rotated in a direction opposite to the tightening direction (e.g. counterclockwise), one (right) approach/separation element 22R is separated from the other (left) approach/separation element 22L so that the tightened battery post 102 is loosened by the clamping sections 21L and 21R which are continuous with the respective contact elements 22R and 22L.

In this configuration, the bolt 7 is inserted through the washer element 152 so that the shaft 71 extends in the right-left direction, wherein the bolt 7 is then screwed into the plate nut 153, whereby the battery post 102 is tightened with the pair of clamping sections 21R and 21L. This means that a miniaturization of the battery terminal 1 in its height direction may be achieved in operation of the bolt 7 by operating the bolt 7 with the shaft 71 extending in the right-left direction.

Further, according to the above-described embodiment, the bolt 7 is used as the operating section, wherein the battery post 102 is tightened with the pair of clamping sections 21R and 21L by rotating the bolt 7. However, the present invention is not limited thereto. A lever which is not shown may be used as the operating section, wherein the battery post 102 may be tightened with the pair of clamping sections 21R and 21L by rotating the lever.

Therefore, the description with limited shapes, material characteristics etc. according to the above disclosure is not limiting the present invention, but merely illustrative for easier understanding the present invention so that the description using names of the elements without a part or all of the limitations to their shapes, material characteristics etc. is also included in the present invention. Namely, while the present invention is particularly shown and described mainly with regard to the specific embodiments, the above mentioned embodiments may be modified in various manners in shape, material characteristics, amount or other detailed features by those skilled in the art without departing from the scope of the technical idea and purpose of the present invention. Therefore, the description with limited shapes, material characteristics etc. according to the above disclosure is not limiting the present invention, but merely illustrative for easier understanding the present invention so that the description using names of the elements without a part or all of the limitations to their shapes, material characteristics etc. is also included in the present invention.

### Reference Signs List

- 1, 11: Battery terminal
- 2: Terminal main body
- 3: Protector
- 7: Bolt (operating section)
- 21R, 21L: Pair of clamping sections
- 22R, 22L: Pair of approach/separation elements (a pair of opposed sections
- 23R, 23L: Overhang sections (mounting portions)
- 31: Ring section (protector main body)
- 32: Elastic element (elastic section)
- 32B: Second elastic section (displacement section)
- 32C: Contact section
- 33: Guide section
- 34: Ring main body (exterior tube section)
- 35: Pressing sections
- 37: Protrusion
- 37a: Sliding surface
- 38: Hooked portion
- 101: Battery main body
- 101a: Upper surface of the battery main body
- 102: Battery post

## Claims

1. A battery terminal (1) configured to be connected to a battery post (102) which protrudes from an upper surface (101a) of a battery main body (101), comprising:
a terminal main body (2); and
a protector (3) configured to be mounted to the terminal main body (2) and positioned between the terminal main body (2) and the upper surface (101a) of the battery main body (101);
wherein the terminal main body (2) includes a pair of clamping sections (21R, 21L), a pair of opposed sections (22R, 22L) and an operating section (7), the pair of clamping sections (21R, 21L) being configured to clamp the battery post (102) and each of the pair of opposed sections (22R, 22L) being continuous with one of both ends of the pair of clamping sections (21R, 21L), wherein the operating section (7) is configured to cause the pair of opposed sections (22R, 22L) to approach each other and tighten the battery post (102),
wherein the protector (3) includes a protector main body (31) supported by the terminal main body (2), and an elastic section (32) extending from the protector main body (31),
wherein the elastic section (32) is provided with a contact section (32C) and a displacement section (32B), the contact section (32C) being configured to be brought into contact with the upper surface (101a) of the battery main body (101), and the displacement section (32B) being continuous with the contact section (32C),
wherein the displacement section (32B) is provided so as to be freely displaced between an introduction position and a retracted position, wherein the displacement section (32B) is configured to be introduced between the pair of opposed sections (22R, 22L) in the introduction position, and in the retracted position, to be retracted to an outside of the pair of the opposed sections (22R, 22L) from the introduction position,
wherein when the displacement section (32B) is in the introduction position, a tightening operation of the battery post (102) by the operating section (7) is limited, and
wherein the displacement section (32B) is configured to be displaced from the introduction position to the retracted position by pressing the contact section (32C) against the upper surface (101a) of the battery main body (101) so that the tightening operation of the battery post (102) by the operating section (7) is allowed.

2. The battery terminal (1) according to claim 1,
wherein, when the displacement section (32B) is in the introduction position, the protector (3) is in a natural state, and
wherein the displacement section (32B) is configured to be elastically deformed and displaced from the introduction position to the retracted position by pressing the contact section (32C) against the upper surface (101a) of the battery main body (101).

3. The battery terminal (1) according to claim 1 or 2,
wherein the elastic section (32) includes a protrusion (37) protruding from the displacement section (32B) toward the protector main body (31), and
wherein the protrusion (37) has a sliding surface (37a) configured to slide to the terminal main body (2).

4. The battery terminal (1) according to any one of claims 1 to 3,
wherein the battery terminal (1) includes guide sections (33) protruding from the protector main body (31) toward the displacement section (32B), and
wherein the guide sections (33) are configured to interpose the displacement section (32B) therebetween and to guide a displacement of the displacement section (32B) between the introduction position and the retracted position.

5. The battery terminal (1) according to any one of claims 1 to 4,
wherein the displacement section (32B) includes a hooked portion (38) on a tip end side, the tip end side being distal from the contact section (32C), and
wherein the hooked portion (38) is configured to be hooked to the terminal main body (2) when the displacement section (32B) is in the introduction position.

6. The battery terminal (1) according to any one of claims 1 to 5, further comprising a mounting portion (23R, 23L) at the pair of clamping sections (21R, 21L), the mounting portion (23R, 23L) protruding toward the upper surface (101a) of the battery main body (101) and being configured to mount the protector main body (31), and
wherein an exterior tube section (34) and a pressing section (35) are provided at the protector main body (31), the exterior tube section (34) being configured to be put on an exterior of the mounting portion (23R, 23L), wherein the pressing section (35) protrudes from the exterior tube section (34) toward the mounting portion (23R, 23L) and is configured to elastically come into contact with the mounting portion (23R, 23L).
